# EUROPEAN PATENT SPECIFICATION

(11) **EP 1 672 881 B1**
(45) Date of publication and mention of the grant of the patent: **06.01.2010**
(21) Application number: 05024874.9
(22) Date of filing: 15.11.2005
(51) Int. Cl.: H04M 1/247, H04M 1/725

(54) **System and method for providing customization of a graphical user interface of a communications device based on an active communications session**
System und Verfahren zur Anpassung einer graphischen Benutzerschnittstelle eines Kommunikationsgeräts anhand einer bestehenden Kommunikationsverbindung
Système et procédé pour adapter une interface utilisateur graphique d'un dispositif de communication en fonction d'une session de communication active

(30) Priority: 20.12.2004 US 17434
(43) Date of publication of application: 21.06.2006
(73) Proprietor: Alcatel Lucent, 75008 Paris (FR)
(72) Inventor: Suhail, Atiya, TX 75025 Plano (US); Rao, Kashipati G., TX 75025 Plano (US); Ozugur, Timucin, TX 75069 Fairview (US); Jachner, Jack, Lexington, MA 02420 (US); Mamidipaka, Sudheer, Washington 98052 Redmond (US); Desai, Snehal, TX 75081 Richardson (US)
(74) Representative: Schmidt, Werner Karl

(56) References cited:
- WO-A-03/056789
- DE-A1- 10 138 224
- US-A1- 2002 009 184

## Description

### BACKGROUND OF THE INVENTION

### Technical Field of the Invention

The present invention generally relates to communications devices. More particularly, and not by way of any limitation, the present invention is directed to system and method for providing feature customization on such communications devices based on the communications session that is currently active.

### Description of Related Art

Voice over Internet Protocol ("VoIP") and wireless communications devices, such as mobile phones, (hereinafter collectively referred to as "enhanced phones") are more rich in features than public switched telephone network ("PSTN") telephones. For example, most enhanced phones include an address book and calendar function. Many also include electronic mail ("email") capability. Accordingly, there may be many instances in which an enhanced phone user may want to browse the address book, check the calendar, or search for a particular email communication during voice communications. For example, if the person with whom the user is talking would like the phone number of a mutual acquaintance, the user might access the phone's address book to access the phone number of the acquaintance and communicate it to the person verbally. Similarly, the person with whom the user is talking may wish to confirm a previously established appointment, in which case it would be helpful for the user to be able to access phone's calendar and locate the appointment for discussion purposes. Additionally, the person with whom the user is talking may wish to discuss issues raised in an email previously sent to the user. In this situation, it would be beneficial to the user to be able to quickly and easily locate the email in question.

Unfortunately, it may be difficult for the user to sift through all of the extraneous information in order to find the information that might be relevant to the current communication. For example, there the user's calendar may have hundreds of entries stored therein, some of which may be personal, others of which may be professional, so to go through them one-by-one would be extremely tedious and may be ultimately unproductive. Similarly, the user's address book may have thousands of contacts stored therein; again, some of these contacts may be personal, others professional. Moreover, within these broad categories of "personal" and "professional" sub-categories may be drawn. For example, personal appointments or contacts may relate to friends, family, church, or other organizations.

Similarly, professional appointments or contacts may be subdivided into different tasks or work groups.

A related situation is that of a computer desktop environment with integrated telephony capability. In one such environment, information related to a caller, such as call logs, project information, relevant documents, and so on, may be populated in a desktop environment of a called party user. A desktop environment can include several portals supported by well-known portal server technology. A portal is primarily a user interface ("UI") framework for integrating other applications, content, and business processes, each of which may include several additional features that add value to the integrated environment. Such features may include, for example, search functionality and single sign-on functionality.

In general, a portal is a customizable desktop UI that is displayed in a standard Internet HTTP browser. It contains information and functionality aggregated together from multiple source sites, applications and/or datastores. It supports a single sign-on model that does not require separate sign-on procedures for all of the aggregated content of the portal.

Additionally, a desktop management system provides a dynamic work environment with integrated collaboration capabilities that help people perform their jobs more productively. This includes applications such as e-mail, instant messaging, web conferencing, and e-learning, which may be implemented using the portal technology.

German Patent DE 101 39 224 A1 discloses a communications device in which tasks of a "to-do list" are associated to entries of an address book. Upon an active communication session, the corresponding party is identified, and the associated tasks are displayed in the terminal.

International Parent Application WO 03/056789 A discloses a user interface and method of viewing unified communications events on a mobile device. The mobile device includes a user interface, a communications event handler, and a communications event database. The communications event handler interfaces with the database and the user interface to provide a user of the mobile device with a communications event history associated with the correspondent of an incoming communications event This gives the advantage that the user of the mobile device is able to determine the context of the communication event.

US Patent Application US 2002/009184 A1 discloses a sonic method of classifying and screening incoming telephone, and other types of calls. Based on information from the network provider, such as a caller ID message from a telephone company, distinctive sounds which are easy to mentally associate with specific callers or categories of callers are generated in place of, or in addition to, other call alerting methods, such as the standard ringing of telephones-so there is no need to go to, view, or to be able to read, the caller ID information on a visual display. The invention can be configured to not generate a distinctive sound for certain callers or categories of callers, so calls from certain callers or categories of callers will not disturb the called party.

### SUMMARY OF THE INVENTION

The invention is directed to the method of claim 1 and the system of claim 5. Advantageous embodiments are claimed in the dependent claims.

One embodiment is a method in a voice terminal for customizing applications in response to an active call. The method comprises assigning at least one category to each of a plurality of entries in an application file; determining a category associated with an active call; a and reconfiguring a GUI of the application to highlight a display of entries associated with the category associated with the active call.

Another embodiment is a system in a voice terminal for customizing applications in response to an active call. The system comprises means for assigning at least one category to each of a plurality of entries in an application file; means for determining a category associated with an active call; and means for reconfiguring a GUI of the application to highlight a display of entries associated with the category associated with the active call.

Another embodiment is a system in a voice terminal for customizing applications in response to an active call. The system comprises a customization controller ("CC") for controlling an application customization process; a configuration manager ("CM") invoked by the CC responsive to a user adding an entry in an application; a feature customizer ("FC") invoked by the CC in response to an active call.

Another embodiment is a method of customizing a desktop of a computer system in response to an outgoing call from the computer system. The method comprises determining a context of the outgoing call; activating at least one of a plurality of desktop customization units based on the determined context; and responsive to the activating, customizing the desktop in accordance with the determined context.

Another embodiment is an apparatus for customizing a desktop of a computer system in response to an outgoing call from the computer system. The apparatus comprises means for determining a context of the outgoing call; means for activating at least one of a plurality of desktop customization units based on the determined context; and means responsive to the activating for customizing the desktop in accordance with the determined context.

Another embodiment is an apparatus for customizing a desktop of a computer system in response to an outgoing call from the computer system. The apparatus comprises a telephony unit for determining a context of the o outgoing call; a plurality of desktop customization units connected to the telephony unit; wherein the telephony unit activates at least one of the desktop customization units based on the determined context and wherein the activated at least one desktop customization unit customizes the desktop in accordance with the determined context.

### BRIEF DESCRIPTION OF THE DRAWINGS

A more complete understanding of the present invention may be had by reference to the following Detailed Description when taken in conjunction with the accompanying drawings wherein:
FIG. 1 illustrates a display of an Address Book in accordance with one embodiment;
FIG. 2 illustrates a display of a Calendar in accordance with one embodiment;
FIG. 3 is a block diagram of an system for implementing feature customization based on an active call in accordance with one embodiment;
FIG. 4 is a flowchart of the operation of the system of FIG. 3 in accordance with one embodiment;
FIG. 5 is a block diagram a system for implementing computer application and desktop management based on a telephone call in accordance with another embodiment;
FIG. 6 is a flowchart illustrating operation of the system of FIG. 5 in connection with a call made by a user to an IVR system; and
FIGs. 7A and 7B illustrate a flowchart of the operation of the system of FIG. 5 in connection with an outgoing call made by a user who has the option of providing a call subject in connection with the outgoing call.

### DETAILED DESCRIPTION OF THE DRAWINGS

Embodiments of the invention will now be described with reference to various examples of how the invention can best be made and used. Like reference numerals are used throughout the description and several views of the drawings to indicate like or corresponding parts, wherein the various elements are not necessarily drawn to scale.

A primary goal of one embodiment is to make the simple features in VoIP and mobile phones richer by customizing them based on an active call. "Address Book" and "Calendar" are two features that are available on most of the VoIP and mobile phones and are extensively used. By making these features customizable, their useablilty can be improved and the end-user provided with a rich feature experience.

In one embodiment, the Address Book and Calendar features of VoIP and mobile phones are customized based on an active call. In particular, a user's Address Book is sorted in an order such that the phone numbers relevant to an active call are easily available. For example, consider that a user is talking to another member of a project team of which the user is also a member. In this case, in accordance with one embodiment as described in greater detail below, the contact information for all of the project team members will be grouped together and this group moved to the top of the Address Book. Additionally, all of the appointments and meetings relevant to the project are highlighted in the user's Calendar. As a result, a user can achieve better organization and improve his or her efficiency.

In one embodiment, customization of such features is achieved as follows. Each entry in the Address Book can be assigned to belong to one or more of several categories. Examples of such categories may include "family," "friends," "colleagues," "project A team member," and so on. In one implementation, several default categories will be provided to a user, at which point the user can simply use them as is, modify them, or create new categories. For example, the user may want to add a category for people with whom he plays soccer ("soccer") or a category "stores" comprising contact information for favorite places to shop. In essence, a user can have as many categories as he desires. Within a category, entries can be listed alphabetically by contact name.

As previously indicated, Address Book entries may be associated with one or more categories in the Address Book. If the entry is associated with more than one category, the user will be required to assign a weight for the entry with respect to each category. For example, the user may have a friend ("Bob Smith") who is also a project team member. In this case, the user can associate the Address Book entry for Bob Smith with both a "friends" category and a "project team" category, assigning a weight for each category; for example, "1" for "friends" and "2" for "colleagues". As described herein, the higher the number, the higher the weight, and the higher the priority. As a result, when the user is engaged in a voice conversation with Bob Smith, the project team group will be listed first, and the friends group will be listed second, with Bob Smith's name being listed first in both groups.

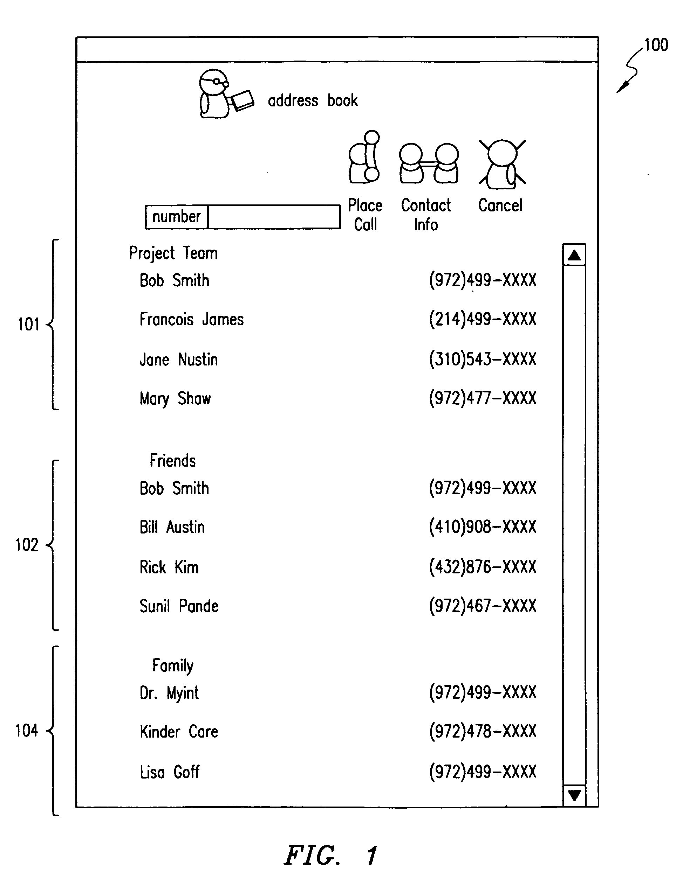

FIG. 1 illustrates a display 100 of the Address Book in the above-described example. In particular, a list of contacts in the project team category 101 is displayed first, a list of contacts in the friends category 102 is displayed next, and a list of contacts in a remaining category ("family") 104 is displayed next.

In the implementation described above, the weights are assigned statically. However, if there is a call subject associated with a call, key words can be extracted from the subject line to assign the weights dynamically. For example, if the subject of the call is "Party on Friday", the category "friends" is likely more relevant to this particular conversation with Bob Smith than is the category "project team". The keyword "party" can be extracted from the subject line and used to assign a greater weight to the friends category in this case.

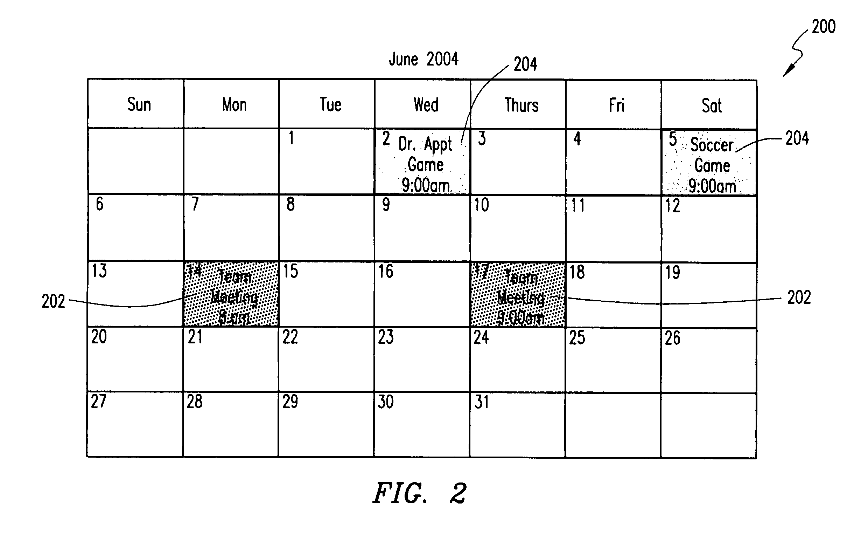

Similarly, each entry in the Calendar is associated with one of the categories defined in the Address Book. specifically, any time a user makes an entry in the Calendar, the user may assign one or more categories (with weights, in the case of multiple categories for an entry) to the entry as described above with reference to the Address Book. Whenever there is an active call, all of the appointment, meeting, reminder, etc., entries in the Calendar associated with the category of the called (in the case of an outgoing call) or calling (in the case of an incoming call) party are highlighted. FIG. 2 illustrates a display 200 of the user's Calendar with team-related appointments 202 highlighted when the user is talking with a team member at work. Other (non-relevant) appointments 204 are greyed out.

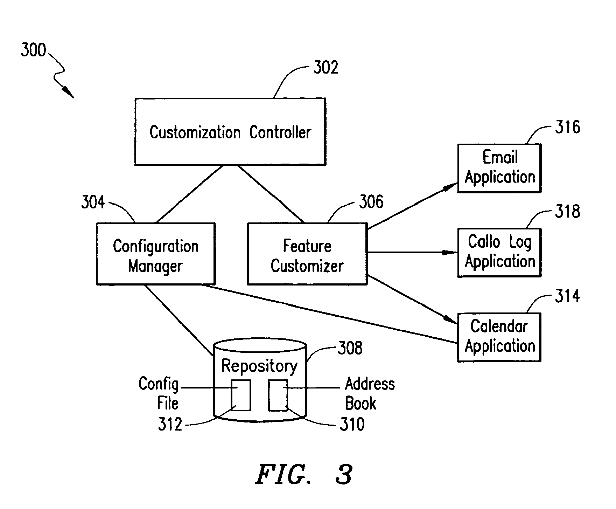

FIG. 3 illustrates a block diagram of an system 300 for implementing feature customization based on an active call in accordance with one embodiment. The system 300 comprises a customization controller ("CC") 302 that controls the features customization process. The CC 302 invokes a configuration manager ("CM") 304 when a user adds an entry in his Address Book or Calendar. Whenever there is an active call, the CC 302 passes to the CM 304 the name of the caller or callee and retrieves therefrom the category for the name. If there is more than one category for the name, the weights for each of those categories are also determined. The CC 302 then invokes a feature customizer ("FC") 306 and passes to it the category or categories and weight (if any) associated with each. A repository 308 is a shared entity that stores an address book application 310, which comprises all of the user's Address Book entries, and a configuration file 312 containing configuration information for each of the entries in the address book database 310.

The FC 306 receives the category or categories and associated weight for each category (if applicable) from the CC 302 and customizes the address book application 310 and a calendar application 314. In one embodiment, the FC 306 also passes each category and weight (if applicable) to an electronic mail ("email") application 316, which uses the information to display all emails related to the category, and a call log application 318, which uses the information to display a log of all previous calls to or from the caller/callee.

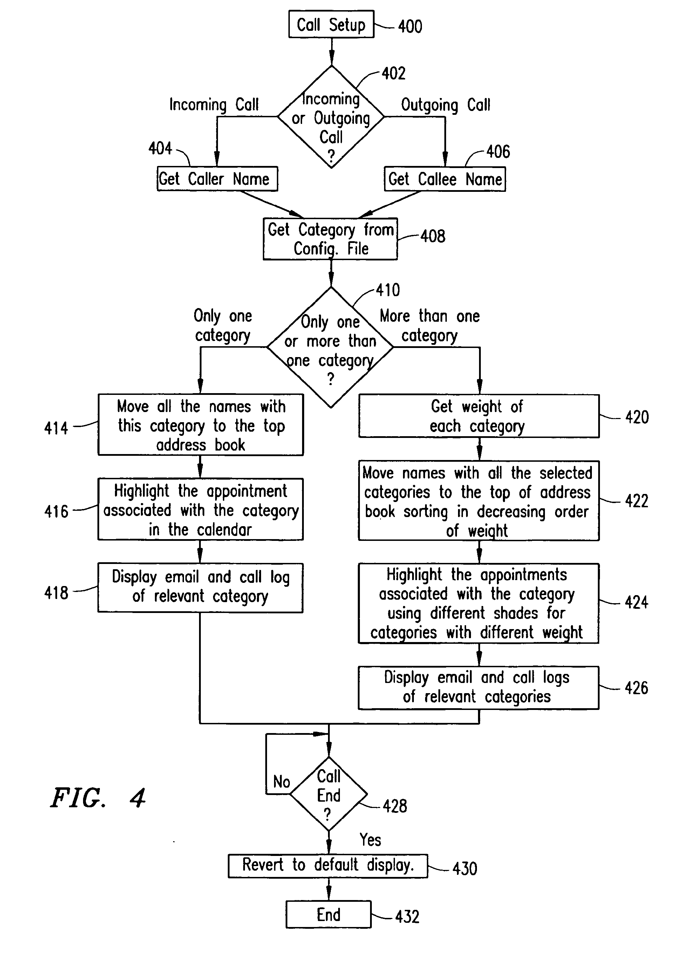

The steps involved in implementing feature customization as described herein are illustrated in FIG. 4. In step 400, a call is made to (incoming call) or from (outgoing call) a user. In step 402, a determination is made whether the call is an incoming or an outgoing call. If it is determined that the call is an outgoing call, execution proceeds to step 404, in which the name of the called party is obtained; otherwise, execution proceeds to step 406, in which the name of the calling party is obtained. Execution proceeds from step 404 or step 406 to step 408, in which one or more categories associated with the called or calling party is obtained from the configuration file 312 (FIG. 3). In step 410, a determination is made whether there is only one category associated with the called or calling party. If so, execution proceeds to step 414, in which all of the names within the category are moved to the top of the address book. In step 416, all of the appointments associated with the category in the Calendar are highlighted. In step 418, all e-mails related to the category are displayed. Additionally, a log of all calls associated with the category are displayed.

If in step 410 it is determined that the called party or calling party is associated with more than one category, execution proceeds to step 420, in which the weight of each category is determined. In step 422, the entries associated with the categories are moved to the top of the address book and sorted in decreasing order of priority as indicated by the weight associated with the category with respect to the called or calling party. In step 424, the appointments associated with the categories are highlighted, with visual cues being used to differentiate among the categories and further indicate the associated weight thereof. In step 426, emails and call logs associated with the categories are displayed in decreasing order of priority as indicated by the weight associated with the category with respect to the called or calling party.

In step 428, a determination is made whether the call has been terminated. If not, execution remains in step 428 until the call is terminated; otherwise, execution proceeds to step 430. In step 430, the display reverts to its default mode; e.g., the address Book entries are displayed in alphabetical order, no highlighting appears in the Calendar, and emails and call log entries are displayed in chronological order. It will be recognized that the "default" display for each of the foregoing may be selectively changed by the user. Execution ends in step 432.

It should be noted that any time a new party is "conferenced in" on a call as it proceeds as illustrated in FIG. 4, the category or categories associated with the new party will be obtained from the configuration file 312, as occurs with the original caller/callee in step 408, and then steps 410-428 will be executed with reference to the category or categories associated with all of the call participants (i.e., the original caller/callee and any new parties). Similarly, if a party is dropped from the call, steps 410-428 will be re-executed with reference to the category or categories associated with all of the remaining call participants.

Accordingly, the forgoing embodiment as described above provides a system and method for providing feature customization for enhanced phones based on an active call.

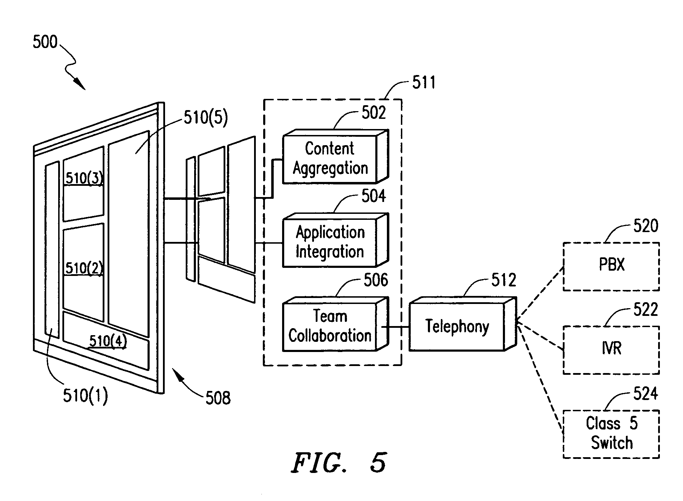

FIG. 5 is a block diagram of another embodiment comprising a system 500 for implementing computer application and desktop management based on a telephone call. As shown in FIG. 5, the system 500 comprises a content aggregation unit 502, an application integration unit 504, and a team collaboration unit 506 for implementing a portal 508 displayed to a user. It will be recognized that the portal 508 may comprise a plurality of portlets 510(1)-510(5) for organizing information to be displayed to the user. The units 502, 504, and 506 will likely reside one or more servers 511. In accordance with features of one embodiment, a telephony unit 512 is connected to each of the units 502, 504, 506.

The telephony unit 512 comprises all of the telephony functionality for implementing the embodiment described herein for performing application and desktop management based on an active call, as will be described in greater detail below. In general, the telephony unit 512 is cognizant of all telephony events that are performed with respect to the system 500. The telephony unit 512 uses these telephony events to determine which of the units 502, 504, 506 to activate. The telephony unit 512 is further connected to one or more of a PBX system 520, an Interactive Voice Response ("IVR") system 522, and a class 5 switch 524 to enable it to obtain information regarding telephony events.

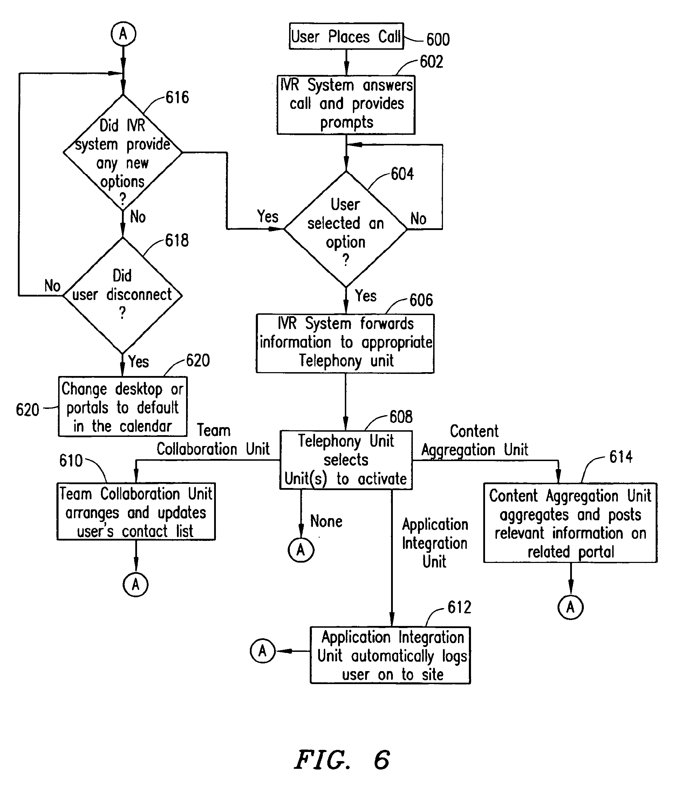

FIG. 6 is a flowchart illustrating operation of the system 500 in connection with a call made by a user to an IVR system, such as the system 522. It will be recognized that, for purposes of the flowchart shown in FIG. 6, the IVR system may be internal, such as in a Help Desk implementation, or External, such as in a travel agency implementation. Execution begins in step 600, in which a user dials in to an IVR system, such as the system 522. In step 602, the IVR system answers the call and prompts the user to select one of several options. For example, in a Help Desk implementation, the options may include: "Dial 1 for software support; Dial 2 for hardware support" and so on. In a travel agency implementation, the options may include "Dial 1 for domestic travel; Dial 2 for international travel" and so on.

In step 604, a determination is made whether the user selected an option in response to the prompts issued in step 602. If it is determined in step 604 that the user did not select an option, execution remains at step 604 until the user selects an option, at which point, execution proceeds to step 606. For purposes of example, it will be assumed that the user selected the software support option by dialing 1 in response to the prompts. In step 606, the IVR system 522 advises the telephony unit 512 that the user requested software support. In step 608, the telephony unit 512 determines which one or more of the units 502, 504, 506, to activate. In one embodiment, as illustrated in FIG. 5, options include the content aggregation unit 502, the application integration unit 504, and the team collaboration unit 506, some combination of those units, or none of the units.

If a determination is made by the telephony unit 512 to activate the team collaboration unit 506, execution proceeds to step 610, in which the team collaboration unit automatically arranges the contact list within the user's messenger. For example, contact information for software support people who are available at the given time, as well as contact information for other support people who have helped the user on previous tickets, are automatically temporarily added to the user's contact list.

If a determination is made by the telephony unit 512 to activate the application integration unit 504,-execution proceeds to step 612. In step 612, the application integration unit 504 allows automatically logs the user on to a secure Help Desk site without requiring him or her to enter a user ID or password. This enables the user to view and place requests related to open software support tickets, for example.

If a determination is made by the telephony unit 512 to activate the content aggregation unit 502, execution proceeds to step 614. In step 614, the content aggregation unit 502 aggregates a variety of information related to the user, such as any previous software tickets opened by the user, currently open tickets, corporate software warnings, etc., and posts this aggregated information on the related portal 508. Following execution of steps 610, 612, and/or 614, or if none of the blocks are activated in step 608, execution proceeds to step 616.

In step 616, a determination is made whether the IVR system 522 has provided any new options. If not, execution proceeds to step 618, in which a determination is made whether the user has disconnected the call. If not, execution returns to step 616; otherwise, execution proceeds to step 620, in which the desktop, or portal, is returned to its previous or default state. If a positive determination is made in step 616, execution returns to step 604 and the process repeats.

It will be recognized that, in some instances, when a user calls another party, he or she can send a "call subject line" associated with the call using Instant Messaging ("IM") or Short Message Service ("SMS"). In such instances, the portal 508 can be populated with information related to the call subject. For example, if a project is mentioned in the call subject line, the portal 508 could be populated with one or more documents related to the project. If the call subject line relates to scheduling a meeting, a calendar application could be opened in the portal 508 to enable the user to schedule the meeting. Additionally, if the populated information is an application that requires the user to log in, the system 500 automatically logs the user in.

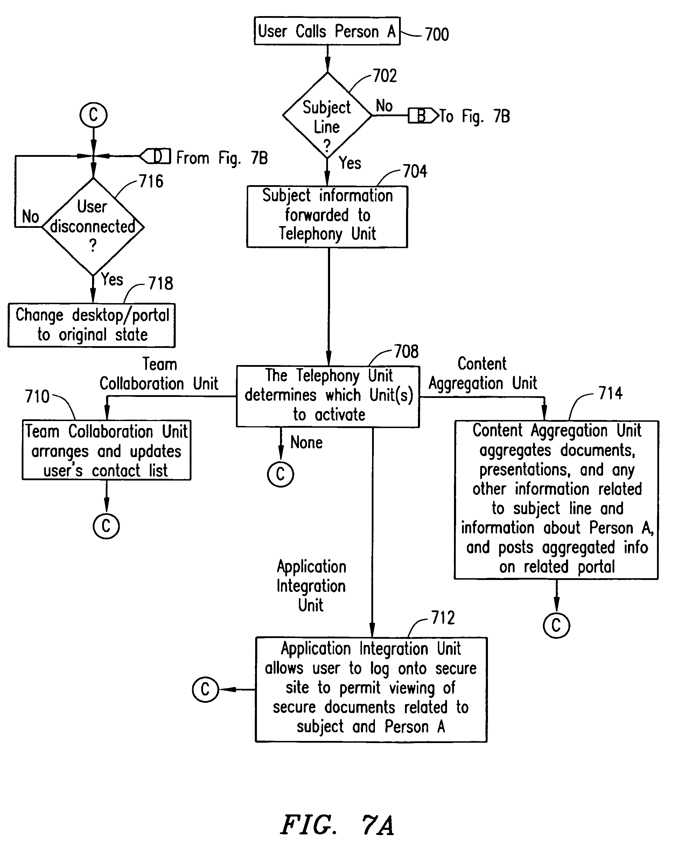

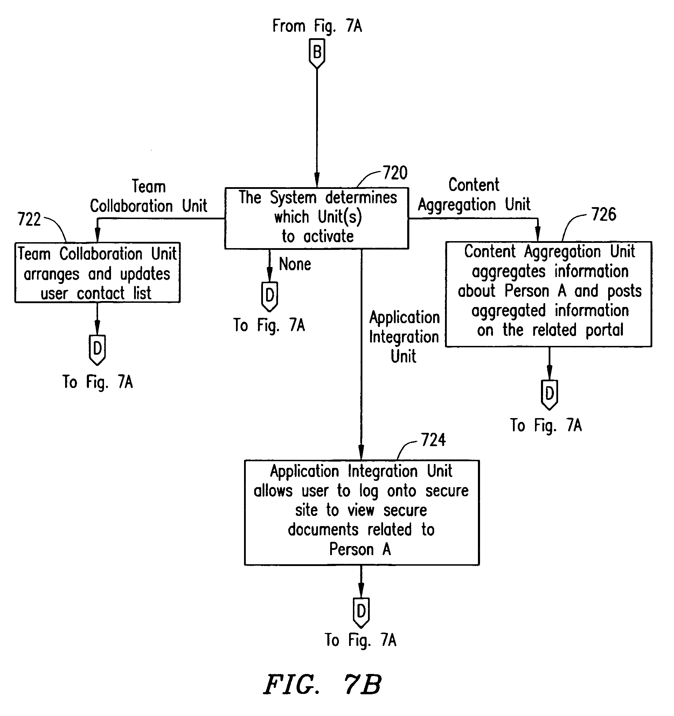

FIGs. 7A and 7B illustrate a flowchart illustrating operation of the system 500 in connection with an outgoing call made by a user who has the option of providing a call subject in connection with the outgoing call.

Execution begins in step 700 in which a user calls Person
A. In step 702, a determination is made whether a call subject line has been provided in connection with the call. If so, execution proceeds to step 704, in which the call subject information is forwarded to the telephony unit 512. It will be assumed for the sake of example herein that the subject line mentions "Project X". In step 708, the telephony unit 512 determines which one or more of the units 502, 504, 506, to activate. In one embodiment, as illustrated in FIG. 5, options include the content aggregation unit 502, the application integration unit 504, and the team collaboration unit 506, some combination of those units, or none of the units.

If a determination is made by the telephony unit 512 to activate the team collaboration unit 506, execution proceeds to step 710, in which the team collaboration unit automatically arranges the contact list within the user's messenger. In particular, contact information for Person A is automatically temporarily added to the user's contact list.

If a determination is made by the telephony unit 512 to activate the application integration unit 504, execution proceeds to step 712. In step 712, the application integration unit 504 allows automatically logs the user on to secure sites without requiring him or her to enter a user ID or password. This enables the user to view documents and information related to Project X and Person A if allowed.

If a determination is made by the telephony unit 512 to activate the content aggregation unit 502, execution proceeds to step 714. In step 714, the content aggregation unit 502 aggregates a variety of information, documents, and/or presentations related to Project X, as well as information, about Person A, and posts the aggregated information on the related portal 508. Following execution of steps 710, 712, and/or 714, or if none of the blocks are activated in step 708, execution proceeds to step 716.

In step 716, a determination is made whether the user has disconnected the call. If not, execution returns to step 716; otherwise, execution proceeds to step 718, in which the desktop, or portal, is returned to its previous or default state.

Returning to step 702, if a negative determination is made in that step, execution proceeds to step 720 (FIG. 7B). In step 720, the telephony unit 512 determines which one or more of the units 502, 504, 506, to activate. In one embodiment, as illustrated in FIG. 5, options include the content aggregation unit 502, the application integration unit 504, and the team collaboration unit 506, some combination of those units, or none of the units.

If a determination is made by the telephony unit 512 to activate the team collaboration unit 506, execution proceeds to step 722, in which the team collaboration unit automatically arranges the contact list within the user's messenger. In particular, contact information for Person A is automatically temporarily added to the user's contact list.

If a determination is made by the telephony unit 512 to activate the application integration unit 504, execution proceeds to step 724. In step 724, the application integration unit 504 allows automatically logs the user on to secure sites without requiring him or her to enter a user ID or password. This enables the user to view documents and information related to Person A if allowed.

If a determination is made by the telephony unit 512 to activate the content aggregation unit 502, execution proceeds to step 726. In step 726, the content aggregation unit 502 aggregates a variety information, about Person A and posts the aggregated information on the related portal 508. Following execution of steps 722, 724, and/or 726, or if none of the blocks are activated in step 720, execution returns to step 716 (FIG. 7A).

Accordingly, the embodiments described herein provide systems and methods for customizing display features of a communications device based on characteristics of an active call.

The following features, separately or in any combination, may also constitute advantageous embodiments of the described and/or claimed invention:
- The described and/or claimed method wherein the assigning a weight comprises dynamically assigning a weight to each of the at least two categories assigned to the at least one entry based on a subject of the active call;
- The described and/or claimed method wherein the application comprises a calendar application;
- The described and/or claimed method wherein the GUI comprises a calendar display and the reconfiguring comprises highlighting in a calendar display entries to which the determined category has been assigned;
- The described and/or claimed method wherein the application comprises an address book application;
- The described and/or claimed method wherein the GUI comprises an address book listing and the reconfiguring comprises displaying entries to which the determined category has been assigned at a beginning of an address book listing;
- The described and/or claimed method wherein the application comprises a call log application;
- The described and/or claimed method wherein the reconfiguring comprises displaying entries to which the determined category has been assigned at the beginning of a call log listing;
- The described and/or claimed method wherein the application comprises an email application;
- The described and/or claimed method wherein the reconfiguring comprises displaying entries to which the determined category has been assigned at the beginning of an email message listing;
- A system in a voice terminal for customizing applications in response to an active call, the system comprising: means for assigning at least one category to each of a plurality of entries in an application file; means for determining a category associated with an active call; and means for reconfiguring a GUI of the application to highlight a display of entries associated with the category associated with the active call;
- The described and/or claimed system wherein the means for reconfiguring comprises means for displaying entries to which have been assigned the category associated with the active call more prominently in the GUI than other entries;
- The described and/or claimed system further comprising: means for assigning at least two categories to at least one entry in the application file; and means for assigning a weight to each of the at least two categories assigned to the at least one entry;
- The described and/or claimed system wherein the means for assigning a weight comprises means for dynamically assigning a weight to each of the at least two categories assigned to the at least one entry based on a subject of the active call;
- The described and/or claimed system wherein the active call has at least two categories associated therewith, the means for determining further comprising means for determining a weight associated with each of the at least two categories associated with the active call and the means for reconfiguring further comprising displaying entries to which have been assigned one of the categories associated with the active call in a manner indicative of the relative weight of the categories assigned to the entries;
- The described and/or claimed system wherein the application comprises a calendar application and the GUI comprises a calendar display and wherein the means for reconfiguring comprises means for highlighting in a calendar display entries to which the determined category has been assigned;
- The described and/or claimed system wherein the application comprises an address book application and the GUI comprises an address book listing and wherein the means for reconfiguring comprises means for displaying entries to which the determined category has been assigned at a beginning of an address book listing;
- The described and/or claimed system wherein the application comprises a call log application and the means for reconfiguring comprises means for displaying entries to which the determined category has been assigned at the beginning of a call log listing;
- The described and/or claimed system wherein the application comprises an email application and the means for reconfiguring comprises means for displaying entries to which the determined category has been assigned at the beginning of an email message listing;
- The described and/or claimed system further comprising: means responsive to addition of a new party to the active call for determining a category associated with the new party and, responsive to the category associated with the new party differing from the category associated with the active call, determining a weight assigned to each of the categories; wherein the means for reconfiguring further comprises means for displaying entries to which one of the categories has been assigned in a manner indicative of the relative weights assigned to the categories;
- A method of customizing a desktop of a computer system in response to an outgoing call from the computer system, the method comprising: determining a context of the outgoing call; activating at least one of a plurality of desktop customization units based on the determined context; and responsive to the activating, customizing the desktop in accordance with the determined context;
- The described and/or claimed method wherein the outgoing call is placed to an interactive voice response ("IVR") system, the method further comprising the user selecting an option provided by the IVR system;
- The described and/or claimed method wherein the determining is performed using the IVR option selected by the user;
- The described and/or claimed method wherein the outgoing call includes a call subject line;
- The described and/or claimed method wherein the call subject line is delivered using a method selected from a group of methods consisting of instant messaging, text messaging, and short message service ("SMS") messaging;
- The described and/or claimed method wherein the determining is performed using the call subject line and an identity of a called party;
- The described and/or claimed method wherein the activating comprises activating a team collaboration unit and the customizing comprises updating and arranging a user contact list;
- The described and/or claimed method wherein the customizing further comprises activating an application integration unit and the customizing comprises enabling user access to one or more applications;
- The described and/or claimed method wherein the activating comprises activating a content aggregation unit and the customizing further comprises: aggregating information related to the context; and posting the aggregated information on the desktop;
- Apparatus for customizing a desktop of a computer system in response to an outgoing call from the computer system, the apparatus comprising: means for determining a context of the outgoing call; means for activating at least one of a plurality of desktop customization units based on the determined context; and means responsive to the activating for customizing the desktop in accordance with the determined context;
- The described and/or claimed apparatus further comprising an IVR unit for prompting the user to select one of a plurality of IVR options and a telephony unit for receiving an indication of an IVR option selected by the user;
- The described and/or claimed apparatus wherein the means for determining uses the IVR option selected by the user;
- The described and/or claimed apparatus wherein the outgoing call includes a call subject line;
- The described and/or claimed apparatus wherein the call subject line is delivered using a method selected from a group of methods consisting of instant messaging, text messaging, and short message service ("SMS") messaging;
- The described and/or claimed apparatus wherein the means for determining uses the call subject line and an identity of a called party;
- The described and/or claimed apparatus wherein the means for activating comprises a telephony unit;
- The described and/or claimed apparatus wherein the means for customizing comprises an application integration unit for enabling user access to one or more applications;
- The described and/or claimed apparatus means for customizing comprises a content aggregation unit for aggregating information related to the context and posting the aggregated information on the desktop;
- The described and/or claimed apparatus wherein the means for customizing comprises a team collaboration unit for updating and arranging a user contact list;
- Apparatus for customizing a desktop of a computer system in response to an outgoing call from the computer system, the apparatus comprising: a telephony unit for determining a context of the outgoing call; a plurality of desktop customization units connected to the telephony unit; wherein the telephony unit activates at least one of the desktop customization units based on the determined context and wherein the activated at least one desktop customization unit customizes the desktop in accordance with the determined context;
- The described and/or claimed apparatus further comprising an IVR unit connected to the telephony unit for prompting the user to select one of a plurality of IVR options, wherein the telephony unit selects which at least one of the desktop customization units to activate based on the IVR option selected by the user;
- The described and/or claimed apparatus wherein the outgoing call includes a call subject line;
- The described and/or claimed apparatus wherein the call subject line is delivered using a method selected from a group of methods consisting of instant messaging, text messaging, and short message service ("SMS") messaging;
- The described and/or claimed apparatus wherein the telephony unit selects which at least one of the desktop customization units to activate based on a call subject indicated by the call subject line and an identity of a called party;
- The described and/or claimed apparatus wherein the at least one of the desktop customization units comprises an application integration unit for enabling user access to one or more applications;
- The described and/or claimed apparatus wherein the at least one of the desktop customization units comprises a content aggregation unit for aggregating information related to the context and posting the aggregated information on the desktop;
- The described and/or claimed apparatus wherein the at least one of the desktop customization units comprises a team collaboration unit for updating and arranging a user contact list.

It should be noted that, although the embodiments have been described with reference to SIP, other protocols may be appropriate for use with the embodiments. Moreover, it will be recognized that subscription to selected presentities will be performed in accordance with the selected protocol.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method for use in a voice terminal for customizing applications in response to an active call, the method being **characterized by**:
- assigning at least one category (101, 102, 104) to each of a plurality of entries in an application file;
- assigning at least two categories to at least one entry in the application file; and assigning a weight to each of the at least two categories assigned to the at least one entry;
- responsive to an active call, obtaining a name of a called or calling party and retrieving (408) therefrom the category (101, 102, 104) for the name, and, if there is more than one category for the name, retrieving (420) a weight for each of the more than one category; and
- reconfiguring a GUT of the application to highlight a display (100) of entries associated with the one or more categories (101, 102, 104) for the name, wherein in case the active call has at least two categories associated therewith, the reconfiguring further comprises displaying entries to which have been assigned one of the categories associated with the active call in a manner indicative of the relative weight of the categories assigned to the entries.

2. The method of claim 1, wherein the reconfiguring comprises displaying entries to which have been assigned the category associated with the active call more prominently in the GUI than other entries.

3. The method of claim 1 or claim 2, wherein the assigning a weight comprises dynamically assigning a weight to each of the at least two categories assigned to the at least one entry based on a subject of the active call.

4. The method of any one of claims 1 to 3, further comprising, responsive to addition of a new party to the active call: determining a category associated with the new parity; responsive to the category associated with the new party differing from the category associated with the active call, determining a weight assigned to each of the categories;
wherein the reconfiguring further comprises displaying entries to which one of the categories has been assigned in a manner indicative of the relative weights assigned to the categories.

5. A system for use in a voice terminal for customizing applications in response to an active call, the system being **characterized by**:
- means for assigning at least one category (101, 102, 104) to each of a plurality of entries in an application file, for assigning at least two categories to at least one entry in the application file; and for assigning a weight to each of the at least two categories assigned to the at least one entry;
- means for obtaining, responsive to an active call, a name of a called or calling party and for retrieving (408) therefrom the category (101, 102, 104) for the name;
- means for retrieving, if there is more than one category for the name, a weight for each of the more than one category;
- means for reconfiguring a GUI of the application to highlight a display of entries associated with the one or more categories (141, 102, 104) for the name, wherein in case the active call has at least two categories associated therewith, the means for reconfiguring are further adapted for displaying entries to which have been assigned one of the categories associated with the active call in a manner indicative of the relative weight of the categories assigned to the entries.

6. The system of claim 5, wherein the means for reconfiguring comprises means for displaying entries to which have been assigned the category associated with the active call more prominently in the GUI than other entries.

7. The system of claim 5 or claim 6, wherein the means for assigning a weight comprises means for dynamically assigning a weight to each of the at least two categories assigned to the at least one entry based on a subject of the active call.

8. The system of any one of claims 5 to 7, further comprising: means responsive to addition of a new party to the active call for determining a category associated with the new party and, responsive to the category associated with the new party differing from the category associated with the active call, determining a weights assigned to each of the categories; wherein the means for reconfiguring further comprises means for displaying entries to which one of the categories has been assigned in a manner indicative of the relative weights assigned to the categories.

## Patentansprüche

1. Ein Verfahren zur Verwendung in einem Sprachendgerät zum Anpassen von Anwendungen als Reaktion auf eine bestehende Kommunikationsverbindung, wobei das Verfahren **gekennzeichnet ist durch**:
- Zuordnen mindestens einer Kategorie (101, 102, 104) zu einer jeden einer Vielzahl von Eingaben in einer Anwendungsdatei;
- Zuordnen mindestens zweier Kategorien zu mindestens einer Eingabe in der Anwendungsdatei; und Zuordnen einer Gewichtung zu einer jeden der mindestens zwei Kategorien, welche der mindestens einen Eingabe zugeordnet sind;
- als Reaktion auf eine bestehende Kommunikationsverbindung, Erhalten eines Namens eines angerufenen oder anrufenden Teilnehmers und Abfragen (408) der Kategorie (101, 102, 104) für den Namen, und wenn es mehr als eine Kategorie für den Namen gibt, Abfragen (420) einer Gewichtung für eine jede der mehr als einen Kategorie; und
- Rekonfigurieren einer GUI der Anwendung, um eine Anzeige (100) von mit der einen oder mehreren Kategorien (101, 102, 104) für den Namen assoziierten Eingaben hervorzuheben, wobei, wenn die bestehende Kommunikationsverbindung mindestens zwei damit assoziierte Kategorien hat, das Rekonfigurieren weiterhin das Anzeigen von Eingaben, welchen eine der mit mit der bestehenden Kommunikationsverbindung assoziierten Kategorien zugeordnet worden sind, unter Angabe der relativen Gewichtung der den Eingaben zugeordneten Kategorien umfasst.

2. Das Verfahren nach Anspruch 1, wobei das Rekonfigurieren das Anzeigen der Eingaben, welchen die mit der bestehenden Kommunikationsverbindung assoziierte Kategorie zugeordnet worden sind, umfasst, wobei diese Eingaben in der GUI gegenüber anderen Eingaben hervorgehoben werden.

3. Das Verfahren nach Anspruch 1 oder Anspruch 2, wobei das Zuordnen einer Gewichtung das dynamische Zuordnen einer Gewichtung zu einer jeden der mindestens zwei Kategorien, welche der mindestens einen Eingabe zugeordnet sind, auf der Basis einer Sachangabe der bestehenden Kommunikationsverbindung umfasst.

4. Das Verfahren nach einem beliebigen der Ansprüche 1 bis 3, weiterhin umfassend, als Reaktion auf das Hinzukommen eines neuen Teilnehmers zur bestehenden Kommunikationsverbindung: Bestimmen einer mit dem neuen Teilnehmer assoziierten Kategorie; wenn die mit dem neuen Teilnehmer assoziierte Kategorie von der mit der bestehenden Kommunikationsverbindung assoziierten Kategorie abweicht, Bestimmen einer einer jeden der Kategorien zugeordneten Gewichtung; wobei das Rekonfigurieren weiterhin das Anzeigen der Eingaben, welchen eine der Kategorien zugeordnet worden ist, unter Angabe der den Kategorien zugeordneten relativen Gewichtungen umfasst.

5. Ein System zur Verwendung in einem Sprachendgerät zum Anpassen von Anwendungen als Reaktion auf eine bestehende Kommunikationsverbindung, wobei das System **gekennzeichnet ist durch**:
- Mittel zum Zuordnen mindestens einer Kategorie (101, 102, 104) zu einer jeden einer Vielzahl von Eingaben in einer Anwendungsdatei; zum Zuordnen mindestens zweier Kategorien zu mindestens einer Eingabe in der Anwendungsdatei; und zum Zuordnen einer Gewichtung zu einer jeden der mindestens zwei der mindestens einen Eingabe zugeordneten Kategorien;
- Mittel zum Erhalten, als Reaktion auf eine bestehende Kommunikationsverbindung, eines Namens eines angerufenen oder eines anrufenden Teilnehmers, und zum Abfragen (408) der Kategorie (101, 102, 104) für den Namen;
- Mittel zum Abfragen, wenn es mehr als eine Kategorie für den Namen gibt, einer Gewichtung für eine jede der mehr als einen Kategorie; und
- Mittel zum Rekonfigurieren einer GUI der Anwendung, um eine Anzeige von mit der einen oder mehreren Kategorien (101, 102, 104) für den Namen assoziierten Eingaben hervorzuheben, wobei, wenn die bestehende Kommunikationsverbindung mindestens zwei damit assoziierte Kategorien hat, die Mittel zum Rekonfigurieren weiterhin dazu ausgelegt sind, die Eingaben, welchen eine der mit der bestehenden Kommunikationsverbindung assoziierten Kategorien zugeordnet worden ist, unter Angabe der relativen Gewichtung der den Eingaben zugeordneten Kategorien anzuzeigen.

6. Das System nach Anspruch 5, wobei die Mittel zum Rekonfigurieren Mittel zum Anzeigen von Eingaben, welchen die mit der bestehenden Kommunikationsverbindung assoziierte Kategorie zugeordnet worden ist, umfasst, welche gewährleisten, dass diese Eingaben in der GUI stärker hervorgeboben werden als andere Eingaben.

7. Das System nach Anspruch 5 oder Anspruch 6, wobei die Mittel zum Zuordnen einer Gewichtung Mittel zum dynamischen Zuordnen einer Gewichtung zu einer jeden der mindestens einen Eingabe auf der Basis einer Sachangabe der bestehenden Kommunikationsverbindung umfassen.

8. Das System nach einem beliebigen der Ansprüche 5 bis 7, weiterhin umfassend: Mittel, als Reaktion auf das Hinzukommen eines neuen Teilnehmers zur bestehenden Kommunikationsverbindung, zum Bestimmen einer mit dem neuen Teilnehmer assoziierten Kategorie und, wenn die mit dem neuen Teilnehmer assoziierte Kategorie von der mit der bestehenden Kommunikationsverbindung assoziierten Kategorie abweicht, Bestimmen einer einer jeden der Kategorien zugeordneten Gewichtung;
wobei die Mittel zum Rekonfigurieren weiterhin Mittel zum Anzeigen der Eingaben, welchen eine der Kategorien zugeordnet worden ist, unter Angabe der den Kategorien zugeordneten relativen Gewichtungen umfasst.

## Revendications

1. Procédé à utiliser dans un terminal vocal pour personnaliser des applications en réponse à un appel actif, le procédé étant **caractérisé par** :
- assignation d'au moins une catégorie (101, 102, 104) à chacune d'une pluralité d'entrées dans un fichier d'application ;
- assignation d'au moins deux catégories à au moins une entrée dans le fichier d'application ; et assignation d'une pondération à chacune des au moins deux catégories assignées à la au moins une entrée ;
- en réponse à un appel actif, obtention d'un nom d'une partie appelée ou appelante et récupération (408) à partir de ce nom de la catégorie (101, 102, 104) pour le nom, et, s'il existe plusieurs catégories pour le nom, récupération (420) d'une pondération pour chacune des plusieurs catégories ; et
- reconfiguration d'une interface GUI de l'application pour mettre en évidence un affichage (100) des entrées associées à la ou les catégorie(s) (101, 102, 104) pour le nom, dans lequel au cas où l'appel actif a au moins deux catégories associées, la reconfiguration comprend en outre l'affichage d'entrées auxquelles a été assignée l'une des catégories associées à l'appel actif de manière à indiquer la pondération relative des catégories assignées aux entrées.

2. Procédé selon la revendication 1, dans lequel la reconfiguration comprend l'affichage d'entrées auxquelles a été assignée la catégorie associée à l'appel actif qui domine les autres entrées dans l'interface GUI.

3. Procédé selon la revendication 1 ou 2, dans lequel l'assignation d'une pondération comprend l'assignation dynamique d'une pondération à chacune des au moins deux catégories assignées à la au moins une entrée sur la base d'un sujet de l'appel actif.

4. Procédé selon l'une quelconque des revendications 1 à 3, comprenant en outre, en réponse à l'ajout d'une nouvelle partie à l'appel actif: la détermination d'une catégorie associée à la nouvelle partie ; en réponse au fait que la catégorie associée à la nouvelle partie est différente de la catégorie associée à l'appel actif, la détermination d'une pondération assignée à chacune des catégories ;
dans lequel la reconfiguration comprend en outre l'affichage d'entrées auxquelles l'une des catégories a été assignée de manière à indiquer les pondérations relatives assignées aux catégories.

5. Système à utiliser dans un terminal vocal pour personnaliser des applications en réponse à un appel actif, le système étant **caractérisé par** :
- moyens pour assigner au moins une catégorie (101, 102, 104) à chacune d'une pluralité d'entrées dans un fichier d'application, pour assigner au moins deux catégories à au moins une entrée dans le fichier d'application ; et pour assigner une pondération à chacune des au moins deux catégories assignées à la au moins une entrée :
- moyens pour obtenir, en réponse à un appel actif, un nom d'une partie appelée ou appelante et pour récupérer (408) à partir de ce nom la catégorie (101, 102, 104) pour le nom ;
- moyens pour récupérer, s'il existe plusieurs catégories pour le nom, une pondération pour chacune des plusieurs catégories ;
- moyens pour reconfigurer une interface GUI de l'application pour mettre en évidence un affichage des entrées associées à la ou les catégorie(s) (101, 102, 104) pour le nom, dans lequel au cas où l'appel actif a au moins deux catégories associées, les moyens pour reconfigurer sont en outre adaptés pour afficher des entrées auxquelles a été assignée l'une des catégories associées à l'appel actif de manière à indiquer la pondération relative des catégories assignées aux entrées.

6. Système selon la revendication 5, dans lequel les moyens pour reconfigurer comprennent des moyens pour afficher des entrées auxquelles a été assignée la catégorie associée à l'appel actif qui domine les autres entrées dans l'interface GUI.

7. Système selon la revendication 5 ou 6, dans lequel les moyens pour assigner une pondération comprennent des moyens pour assigner dynamiquement une pondération à chacune des au moins deux catégories assignées à la au moins une entrée sur la base d'un sujet de l'appel actif.

8. Système selon l'une quelconque des revendications 5 à 7, comprenant en outre : des moyens sensibles à l'ajout d'une nouvelle partie à l'appel actif pour déterminer une catégorie associée à la nouvelle partie et en réponse au fait que la catégorie associée à la nouvelle partie est différente de la catégorie associée à l'appel actif, pour déterminer une pondération assignée à chacune des catégories ; dans lequel les moyens pour reconfigurer comprennent en outre des moyens pour afficher des entrées auxquelles a été assignée l'une des catégories de manière à indiquer les pondérations relatives assignées aux catégories.
